# EUROPÄISCHE PATENTSCHRIFT

(11) **EP 3 112 718 B1**
(45) Veröffentlichungstag und Bekanntmachung des Hinweises auf die Patenterteilung: **19.08.2020**
(21) Anmeldenummer: 16177075.5
(22) Anmeldetag: 30.06.2016
(51) Int. Cl.: F16D 55/2255, F16D 65/18, F16C 33/46

(54) **SCHEIBENBREMSE FÜR EIN NUTZFAHRZEUG**
DISC BRAKE FOR A COMMERCIAL VEHICLE
FREIN À DISQUE POUR UN VÉHICULE UTILITAIRE

(30) Priorität: 01.07.2015 DE 102015110616; 14.04.2016 DE 102016106881
(43) Veröffentlichungstag der Anmeldung: 04.01.2017
(73) Patentinhaber: KNORR-BREMSE Systeme für Nutzfahrzeuge GmbH, 80809 München (DE)
(72) Erfinder: ADAMCZYK, Philipp, 87677 Stöttwang (DE); WEBER, Ralf, 80992 München (DE)

(56) Entgegenhaltungen:
- DE-A1- 19 542 876
- DE-A1- 19 646 231
- JP-A- 2010 096 196

## Beschreibung

Die Erfindung betrifft eine Scheibenbremse für ein Nutzfahrzeug nach dem Oberbegriff des Anspruchs 1.

Die Betätigung der Zuspannvorrichtung einer Scheibenbremse, wie sie in der DE 94 22 342 U1 offenbart ist, erfolgt beispielsweise pneumatisch, wobei die Zuspannkraft über einen mit dem Bremshebel in Wirkverbindung stehenden pneumatisch beaufschlagten Bremszylinder erzeugt wird. Prinzipiell kann die Zuspannkraft auch hydraulisch oder elektromechanisch aufgebracht werden.

Um eine ausreichende, auf eine Bremsscheibe wirkende Bremskraft zu erzielen, dient der Bremshebel als mechanische Übersetzung, wobei sich der Bremshebel mit einem Exzenterabschnitt mittels Schwenklagern einerseits am Bremssattel und andererseits an einer Brücke abstützt. In dieser ist mindestens ein Bremsstempel gehalten, der bei einer Bremsung durch den verschwenkten, an der Brücke angreifenden Bremshebel gegen einen Bremsbelag in Richtung der fahrzeugseitigen Bremsscheibe gedrückt wird.

Das bremssattelseitige Schwenklager kann als Gleitlager ausgebildet sein, während das brückenseitige Schwenklager in diesem Fall als Wälzlager ausgebildet ist. In einer anderen Ausführungsvariante ist das brückenseitige Schwenklager als Gleitlager und das bremssattelseitige als Wälzlager gestaltet. Diese unterschiedliche Ausbildung ist als zwingend anzusehen, um die Reibung im System zu reduzieren. Dies insbesondere deshalb, weil die Hysterese des Gesamtsystems aufgrund einer Schnittstelle zu einem ABS-System einen bestimmten Wert nicht überschreiten darf.

Je nach Anforderung bzw. baulichen Gegebenheit kommen unterschiedliche Konfigurationen von Scheibenbremsen zum Einsatz, die sich hinsichtlich der Anordnung ihres Bremshebels bzw. des daran angreifenden Bremszylinders unterscheiden.

Der Hebelarm des Bremshebels einer sogenannten radialen Scheibenbremse erstreckt sich in Achsrichtung der Bremsscheibe, während der Hebelarm eines Bremshebels einer sogenannten axialen Scheibenbremse sich quer dazu erstreckt.

Diese beiden Scheibenbremsen unterscheiden sich in ihrer Funktion insoweit als die Schwenkrichtung des Bremshebels der axialen Scheibenbremse entgegengesetzt zur Schwenkrichtung des Bremshebels der radialen Scheibenbremse verläuft, was bei Verschwenkung des Bremshebels dazu führt, dass auch die Schwenkrichtung der Wälzlager entgegengesetzt verläuft.

Insbesondere aufgrund des begrenzten Bauraums im Bremssattel finden vielfach Nadellagersegmente Verwendung, die in einer ortsfesten Lagerschale schwenkbar gehalten sind und die nach einem Lösen der Bremse und Zurückschwenken des Bremshebels in ihre Ausgangslage gebracht werden müssen.

Hierzu ist am jeweiligen Bremshebel mindestens ein Rückführelement angeordnet, das beim Zurückschwenken des Bremshebels am Käfig angreift und das Wälzlagersegment sozusagen mitschleppt.

Aufgrund der geschilderten unterschiedlichen Schwenkrichtungen der Wälzlagersegmente, je nachdem, ob in einer radialen oder axialen Scheibenbremse angeordnet, müssen auch unterschiedliche Wälzlagersegmente eingesetzt werden, deren Korrespondenzteile mit den Rückführelementen des jeweiligen Bremshebels entsprechend modifiziert sind. Naturgemäß ist diese Bauartenvielfalt mit entsprechenden Kosten verbunden, die einer Kostenoptimierung, wie sie gerade für Serienteile, wie sie Scheibenbremsen darstellen, stets angestrebt wird, entgegensteht.

Aus der DE 195 42 876 A1 sowie der DE 196 46 231 A1 ist jeweils ein Wälzlager bekannt, dessen Käfig, entgegen dem eines gattungsgemäßen Wälzlagers, umfänglich geschlossen ist. In der JP 2010 096196 A ist ein als Schwenklager fungierendes Wälzlager thematisiert, mit einem kreisabschnittförmigen Käfig.

Der Erfindung liegt die Aufgabe zugrunde, eine Scheibenbremse der gattungsgemäßen Art so weiterzuentwickeln, dass die Wälzlagersegmente für unterschiedliche Bremsentypen einsetzbar sind und somit die Herstellungskosten gesenkt werden.

Diese Aufgabe wird durch eine Scheibenbremse mit den Merkmalen des Anspruchs 1 gelöst.

Die Aufgabe wird auch durch eine Scheibenbremse mit den Merkmalen der Ansprüche 2 und 3 gelöst.

Eine Lagerung für eine Zuspannvorrichtung einer Scheibenbremse, wobei die Scheibenbremse einen eine fahrzeugseitige Bremsscheibe übergreifenden Bremssattel aufweist, in welchem die Zuspannvorrichtung mit einem mittels Schwenklagern gelagerten Bremshebel angeordnet ist, aufweisend ein Schwenklager, welches als ein in einem Käfig gehaltene Wälzkörper aufweisendes, in Schwenkrichtung des Bremshebels der zuzuordnenden Zuspannvorrichtung gekrümmtes Wälzlagersegment ausgebildet ist, wobei der Käfig in Schwenkrichtung des Bremshebels der zuzuordnenden Zuspannvorrichtung beweglich in einer Lagerschale gehalten ist, wobei der Käfig zur Korrespondenz mit einem Rückführelement des Bremshebels der zuzuordnenden Zuspannvorrichtung an mindestens einer gekrümmten Kante mit einem Mitnehmer eine Nase aufweist, ist so ausgebildet, dass der Käfig in einer ersten Position und um 180° gedreht in einer zweiten Position in die Lagerschale einsetzbar ist.

Mit dieser Ausführung der Lagerung können verschiedene Typen von Scheibenbremsen, nämlich axiale und radiale Scheibenbremsen, versehen werden, ohne dass je Bremsentyp unterschiedliche Bauteile notwendig sind. Eine Anpassung an den jeweiligen Bremsentyp ist lediglich durch eine Drehung des Käfigs um 180° in seiner Lagerschale möglich.

Eine Zuspannvorrichtung für eine radiale Scheibenbremse, mit der oben beschriebenen Lagerung, wobei die radiale Scheibenbremse einen eine fahrzeugseitige Bremsscheibe übergreifenden Bremssattel aufweist, in welchem die Zuspannvorrichtung angeordnet ist, mit einem als Exzenterhebel ausgebildeten schwenkbaren und in Achsrichtung der Bremsscheibe gestreckten Bremshebel, der sich mit einem Exzenterabschnitt mittels Schwenklagern einerseits am Bremssattel und andererseits an einer Brücke abstützt, in der mindestens ein Bremsstempel angeordnet ist, der bei einer Bremsung gegen einen Bremsbelag in Richtung der Bremsscheibe drückbar ist, und wobei der Bremshebel mindestens ein ortsfestes Rückführelement aufweist, ist derart ausgebildet, dass der Käfig in der Lagerschale in der ersten Position gehalten ist, in welcher die Nase des Käfigs der Lagerung an der einem Hebelarm des Bremshebels zugewandten Kante des Käfigs angeordnet ist.

Eine Zuspannvorrichtung für eine axiale Scheibenbremse, mit der oben beschriebenen Lagerung, wobei die axiale Scheibenbremse einen eine fahrzeugseitige Bremsscheibe übergreifenden Bremssattel aufweist, in welchem die Zuspannvorrichtung angeordnet ist, mit einem als Exzenterhebel ausgebildeten schwenkbaren und quer zu einer Achsrichtung der Bremsscheibe gestreckten Bremshebel, der sich mit einem Exzenterabschnitt mittels Schwenklagern einerseits am Bremssattel und andererseits an einer Brücke abstützt, in der mindestens ein Bremsstempel angeordnet ist, der bei einer Bremsung gegen einen Bremsbelag in Richtung der Bremsscheibe drückbar ist, und wobei der Bremshebel mindestens ein ortsfestes Rückführelement aufweist, ist so ausgestaltet, dass der Käfig in der Lagerschale in der zweiten Position um 180° gedreht zu der ersten Position gehalten ist, wobei in der zweiten Position die Nase des Käfigs der Lagerung an der einem Hebelarm des Bremshebels abgewandten Kante des Käfigs angeordnet ist.

Diese konstruktive Ausgestaltung der Zuspannvorrichtung, insbesondere des Wälzlagersegments und hier des Käfigs, wird eine besonders günstige Herstellung möglich, da für die unterschiedlichen Bremsentypen, nämlich den genannten radialen und axialen Scheibenbremsen, identische Wälzlagersegmente eingesetzt werden können, die lediglich bei einer Vormontage zu einer Baueinheit, d.h. zur Verbindung mit der Lagerschale daran unterschiedlich zu positionieren sind.

Durch die identische Ausbildung der Wälzlagersegmente ist eine deutlich rationellere Fertigung als bisher möglich, was im Übrigen auch deren Lagerhaltung einschließt. D.h., bezüglich der Wälzlagersegmente, zu deren Komplettierung die in Schwenkrichtung bewegliche Lagerschale am Käfig gehalten ist, ist, je nach Einsatzzweck, das Wälzlagersegment um 180° zu drehen und mit der Lagerschale zu verbinden, wobei diese an ihren freien Enden unterschiedlich gestaltet ist und bei jedem Bremsentyp positionsgleich montiert wird.

Der Bremshebel der radialen Scheibenbremse ist gegenüber dem der axialen Scheibenbremse wesentlich länger. Dabei ergibt sich ein Verhältnis des maximalen Schwenkwinkels des Bremshebels der axialen Scheibenbremse zu dem der radialen Scheibenbremse von 2 : 1. Auch ist die Drehrichtung der Bremshebel der beiden Bremsentypen entgegengesetzt. Dies ermöglicht bei der erfindungsgemäßen Ausgestaltung den oder vorzugsweise die an den gekrümmten Kanten des Käfigs angebrachten Mitnehmer in bekannter Position anzuordnen, da sie bei Verwendung des Wälzlagersegments in einer radialen Scheibenbremse bei Verschwenkung des Bremshebels unter diesem hinwegtauchen.

Grundsätzlich folgt die Verschwenkung des Wälzlagersegments der Verschwenkung des Bremshebels um den Faktor 0,5, so dass sich das Rückführelement des Bremshebels der radialen Scheibenbremse bei Betätigung von der Position der am Käfig angebrachten Mitnehmer entfernt. Bei einer Rückstellung des Bremshebels wird das Nadellagersegment durch das Rückführelement, beispielsweise einen Zapfen zurückgeführt. Dabei ist die Anschlagkante des Mitnehmers außerhalb der Winkelhalbierenden des kreisbogenförmig gekrümmten Käfigs angeordnet.

Die Rückführung des Nadellagersegments nach einer Verschwenkung des Bremshebels der radialen Scheibenbremse erfolgt durch Anschlag eines Mitnehmers des Bremshebels an einer Nase des Käfigs, die an der zur Krümmung quer verlaufenden Kante angeordnet ist, vorzugsweise angeformt.

Eine spanende Bearbeitung der Lagerfläche des Bremshebels gestaltet sich besonders einfach, wobei am Auslauf der Bearbeitung in Umfangsrichtung der Lagerfläche durch die Geometrie eines Fräswerkzeugs ein Radius entsteht, der als Mitnehmer in Korrespondenz mit der Nase fungiert.

Zu einer vorteilhaften Erweiterung des Einsatzbereiches kann der Käfig der Lagerung zur Korrespondenz mit einem Rückführelement des Bremshebels an einer den Käfig quer zur Krümmung begrenzenden Kante, welche der Kante mit der angeformten Nase gegenüber liegt, eine hakenförmige Nase aufweisen, deren Spitze zu einem Mittelpunkt des Käfigs weist.

Alternativ kann der Käfig der Lagerung zur Korrespondenz mit einem Rückführelement des Bremshebels an einer den Käfig quer zur Krümmung begrenzenden Kante, welche der Kante mit der angeformten Nase gegenüber liegt, eine weitere, hakenförmige Nase aufweisen, deren Spitze zu einem Mittelpunkt des Käfigs weist. So kann der Einsatzbereich des Käfigs weiter vergrößert werden.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: eine Zuspannvorrichtung gemäß der Erfindung in einer perspektivischen Ansicht
- Figur 2: die Zuspannvorrichtung in einer geschnittenen Seitenansicht gemäß der Linie II-II in Fig. 1
- Figuren 3 und 4: jeweils die Zuspannvorrichtung nach Fig. 1 in einer anderen perspektivischen Ansicht, in verschiedenen Betriebsstellungen
- Figur 5: die Zuspannvorrichtung nach Fig. 4 in einer geschnittenen Seitenansicht
- Figur 6: ein weiteres Ausführungsbeispiel einer Zuspannvorrichtung nach der Erfindung in einer perspektivischen Draufsicht
- Figur 7: eine Seitenansicht der Zuspannvorrichtung nach Fig. 6
- Figur 8: eine Seitenansicht auf die Zuspannvorrichtung nach Fig. 6 in einer gegenüber der Fig. 7 anderen Funktionsstellung
- Figuren 9 und 10: jeweils eine Einzelheit der Zuspannvorrichtung in unterschiedlichen Konfigurationen.

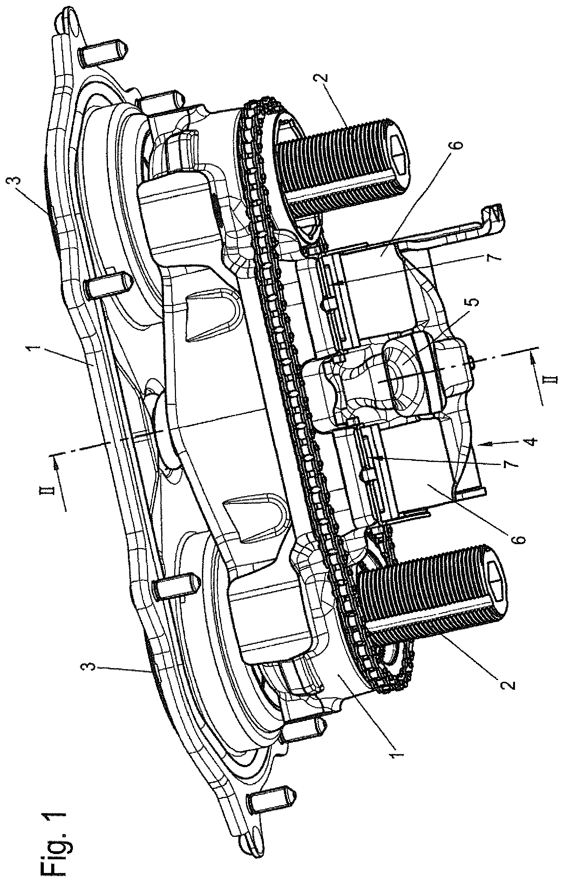

In der **Figur 1** ist eine Zuspannvorrichtung einer Scheibenbremse für ein Nutzfahrzeug dargestellt, die in einem nicht gezeigten Bremssattel positioniert ist und die einen Bremshebel 4 aufweist, der als Exzenterhebel ausgebildet ist, mit einem Hebelarm 5 und zwei, beidseitig des Hebelarms 5 angeordneten Exzenterabschnitten 6, wobei im Folgenden lediglich auf einen Exzenterabschnitt 6 Bezug genommen wird.

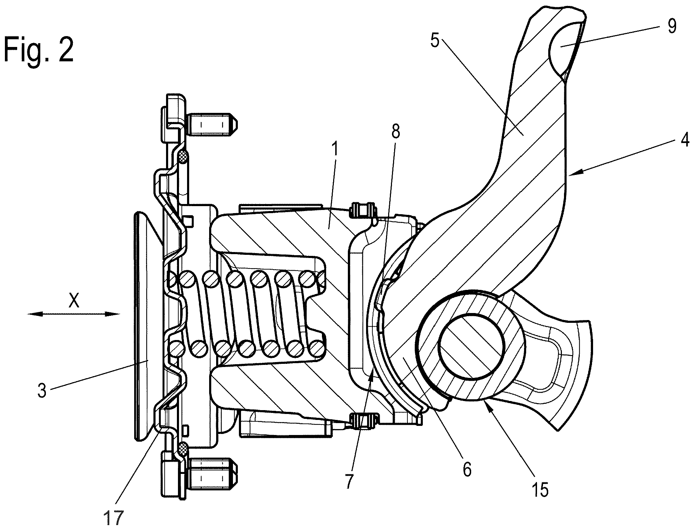

In der **Figur 2** ist die Zuspannvorrichtung nach Figur 1 in einer geschnittenen Seitenansicht erkennbar, wobei am freien Ende des Hebelarms 5 eine Kuhle 9 ausgebildet ist zur Aufnahme eines an einen pneumatisch betätigbaren Bremszylinder angeschlossenen Stößels.

Bei Betätigung des Bremszylinders wird der Bremshebel 4 verschwenkt und zwar in Richtung der Brücke 1, in der zwei parallel und abständig zueinander angeordnete, verstellbare Bremsstempel 2 gehalten sind, die endseitig jeweils ein Druckstück 3 tragen, die bei Betätigung des Bremshebels 4 und Verstellung der Brücke 1 gegen einen gleichfalls nicht dargestellten Bremsbelag drückbar sind, bis dieser eine fahrzeugseitige Bremsscheibe kontaktiert. Im Übrigen ist eine Montageöffnung des Bremssattels auf der den Druckstücken 3 zugewandten Seite durch einen Verschlussdeckel 17 verschlossen, die von den Bremsstempeln 2 durchtreten wird.

Als Widerlager für den Bremshebel 4 ist auf seiner der Brücke 1 abgewandten Seite eine Wälzrolle 15 vorgesehen, die sich an einer Wandung des Bremssattels abstützt.

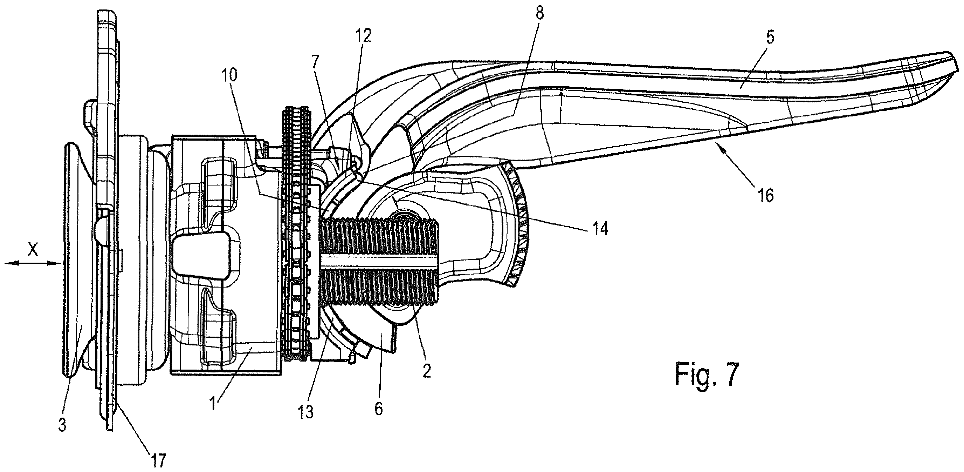

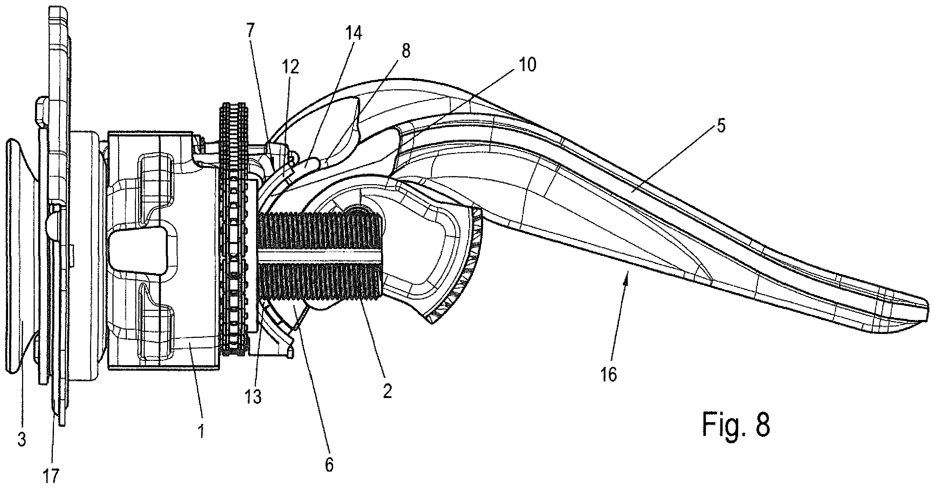

Um eine reibungsarme Verschwenkung des Bremshebels 4 zu gewährleisten, ist zwischen der Brücke 1 und dem Exzenterabschnitt 6 ein Wälzlagersegment 7 angeordnet, das als Einzelheit in den Figuren 7 und 8 abgebildet ist.

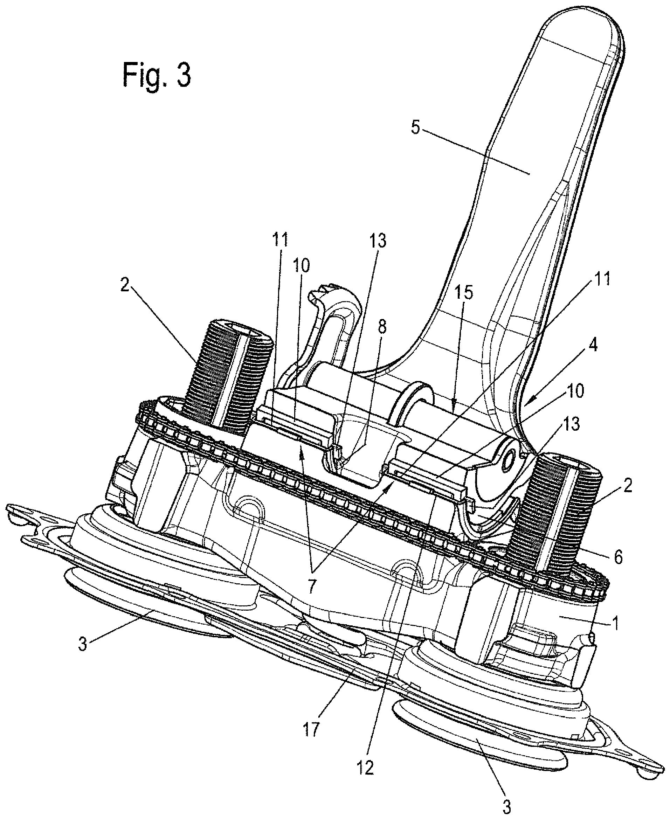

Die **Figur 3** zeigt die Zuspannvorrichtung nach den Figuren 1 und 2 in einer Nichtfunktionsstellung des Bremshebels 4, wobei auch zu erkennen ist, dass das Wälzlagersegment 7 einen Käfig 10 aufweist, in dem Wälzrollen 11, vorzugsweise Nadeln, gehalten sind, wobei der Käfig 10 in Schwenkrichtung beweglich in einer Lagerschale 12 gehalten ist, die mit der Brücke 1 verbunden ist.

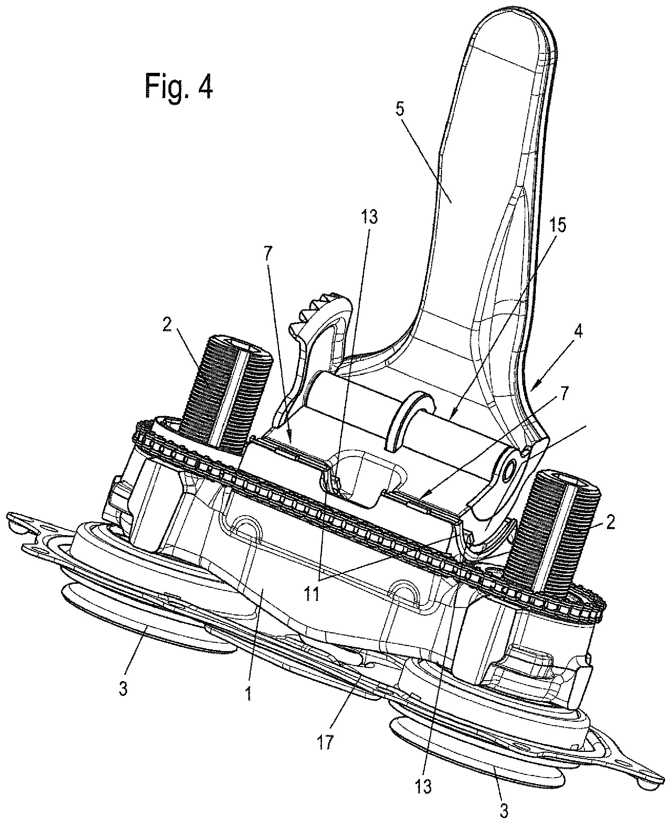

In der **Figur 4** ist die Zuspannvorrichtung nach der Figur 1 in einer Bremsstellung des Bremshebels 4 abgebildet, in der der Bremshebel 4 in Richtung der Brücke 1 verschwenkt ist, wobei die Wälzlagersegmente 7 um den halben Schwenkweg mitgeschleppt sind.

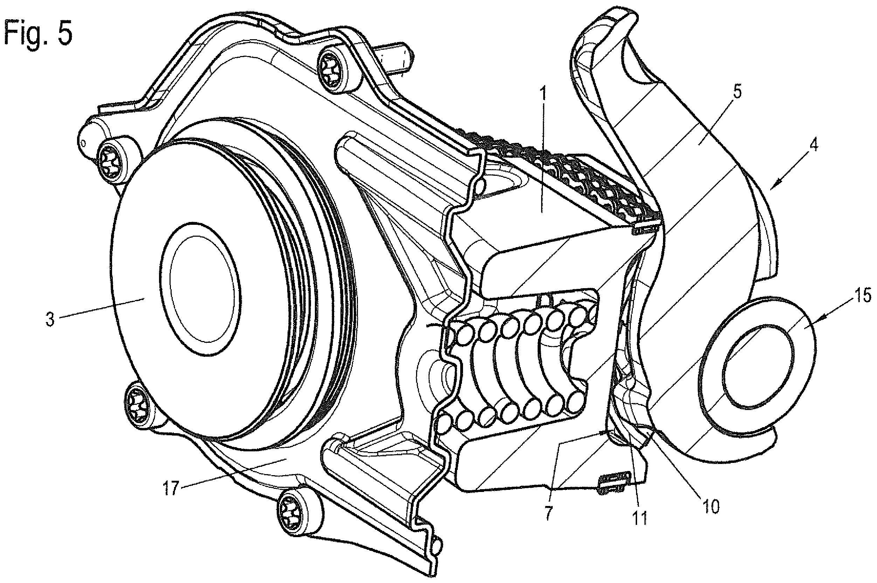

Die **Figur 5** zeigt diese Position in einer geschnittenen Seitenansicht.

Im Ausführungsbeispiel der Figuren 1-3 ist der Hebelarm 5 quer zur Verschieberichtung der Brücke 1, die der Achsrichtung X der Bremsscheibe entspricht, gestreckt und ist damit Bestandteil einer sogenannten axialen Scheibenbremse.

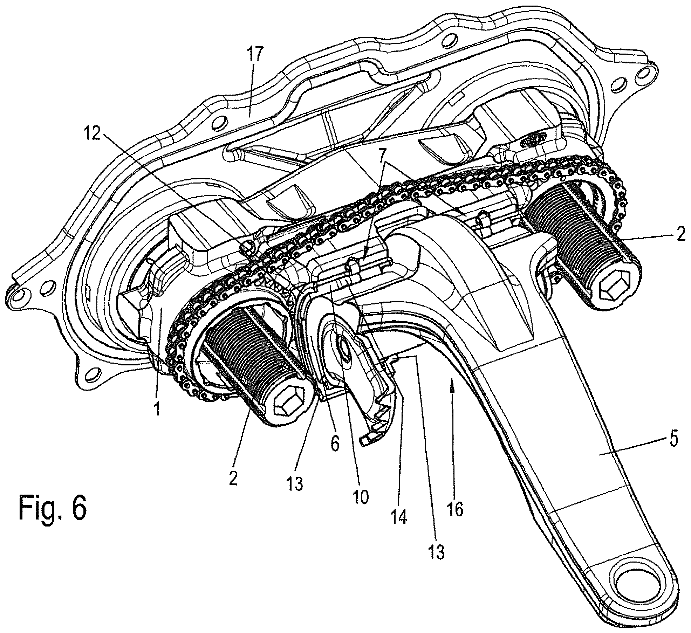

In der **Figur 6** ist eine sogenannte radiale Scheibenbremse erkennbar, bei der der Hebelarm 5 zur Schieberichtung der Brücke 1 gestreckt ist. Hinsichtlich der Anordnung des Wälzlagersegments 7 entspricht diese Konstruktion der nach der Figur 1.

In der **Figur 7** ist die Zuspannvorrichtung dieses Bremsentyps in einer Seitenansicht gezeigt, bei der ein Bremshebel 16 in Nichtfunktionsstellung abgebildet ist.

In der **Figur 8** hingegen ist die Stellung des Bremshebels 16 in Bremsstellung wiedergegeben.

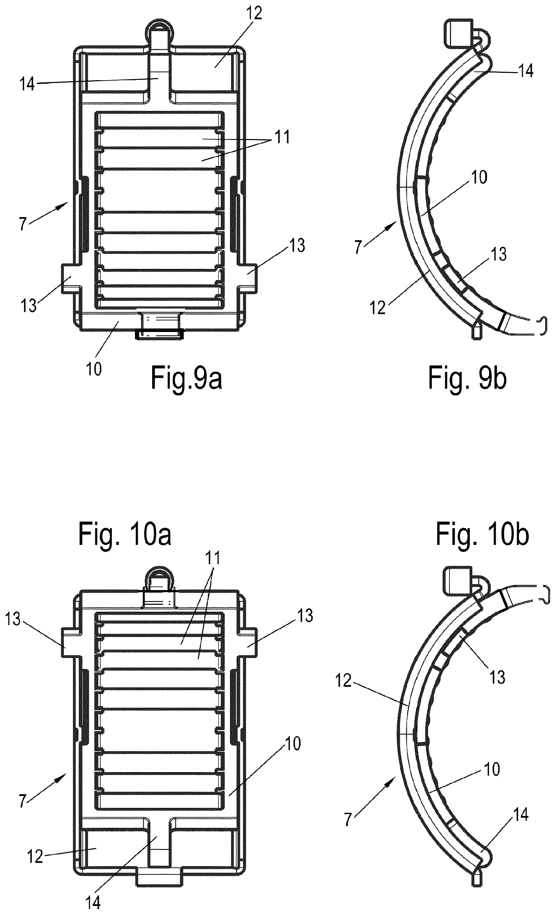

In der **Figur 9** ist, wie erwähnt, das Wälzlagersegment 7 in unterschiedlichen Ansichten abgebildet.

In der **Figur 10** gleichfalls, wobei jeweils die Figuren a) eine Vorderansicht des Wälzlagersegments 7 und die Figuren b) jeweils einen Seitenansicht wiedergeben.

In der Figur 9 ist eine Position des Wälzlagersegments 7 erkennbar, wie sie in eine radiale Scheibenbremse eingesetzt ist, während die Figur 10 das für den Einsatz einer axialen Scheibenbremse bestimmten Konfiguration erkennbar ist.

Erfindungsgemäß weist der Käfig 10 an mindestens einer, im Beispiel an beiden sich gegenüberliegenden gekrümmten Kanten jeweils einen Mitnehmer 13 auf, der bei dem in der Figur 10 gezeigten Beispiel mit einem Rückführelement 8 des Bremshebels 4 der axialen Scheibenbremse in Korrespondenz steht, wenn nach einem Bremsvorgang, d.h. einem Verschwenken des Bremshebels 4 und gleichzeitiger Verschwenkung des Käfigs 10 dieser in eine Ausgangslage zurückgeführt werden soll, entsprechend der Figur 3.

Der solcherart ausgebildete Käfig 10 weist weiterhin auf seiner den Käfig 10 quer zur Krümmung begrenzenden Kante eine angeformte Nase 14 auf, mittels der im Zusammenspiel mit dem Rückführelement 8 des Bremshebels 16 der radialen Bremsscheibe der Käfig 10 mit den darin gehaltenen Wälzkörpern 11 nach einem Lösen der Bremse in eine Ausgangsposition zurückgestellt wird.

In der Figur 7 ist die Lage des Bremshebels 16 einer radialen Scheibenbremse in Nichtfunktionsstellung, d.h. in ungebremster Position gezeigt, während die Figur 8 eine gebremste Position wiedergibt, in der der Bremshebel 16 bzw. der Hebelarm 5 nach unten gedrückt ist, bei gleichzeitiger Verschwenkung des Käfigs 10. Es ist zu erkennen, dass die Nase 14 an dem Rückführelement 8, das als Anschlag ausgebildet ist, anliegt.

Bei einem Zurückschwenken des Bremshebels 16 wird durch das Rückführelement 8 die Nase 14 und damit der Käfig 10 gleichgerichtet in eine Ausgangsposition verschwenkt, entsprechend der Abbildung in Figur 7.

Die gegensätzliche Anordnung des Käfigs 10 ist in der Figur 3 zu erkennen, wobei zu sehen ist, dass das Rückführelement 8 unterhalb des Mitnehmers 13 positioniert ist. Wie erwähnt, ist in der Figur 3 eine Nichtfunktionsstellung abgebildet, in der der Käfig 10 eine Ausgangslage einnimmt.

Beim Verschwenken des Bremshebels 4 hin zur Brücke 1 wird der Käfig 10 gleichfalls mit verschwenkt in gleicher Richtung. Beim Zurückschwenken erfolgt eine Mitnahme des Käfigs 10 durch das Rückführelement 8, das am Mitnehmer 13 anliegt.

Die Bauteile der in den Figuren 9 und 10 gezeigten Lagerung sind identisch, sowohl die Lagerschale 12 wie auch das Wälzlagersegment 7. Um diese Lagerung für den Einsatz der beiden beschriebenen Bremsentypen bereitzustellen, ist lediglich der Käfig 10 entsprechend in der Lagerschale 12 zu positionieren, d.h., um 180° zu drehen.

In einer weiteren Ausgestaltung kann der Käfig 10 an der anderen den Käfig 10 quer zur Krümmung begrenzenden Kante, welche der Kante mit der angeformten Nase 14 gegenüber liegt, eine (hier nicht bezeichnete) Nase aufweisen, deren Gestalt hakenförmig ist. Diese hakenförmige Nase ist in den Figuren 9b, 10b gestrichelt angedeutet und weist mit ihrer Spitze nach innen, d.h. auf einen (nicht gezeigten, aber leicht vorstellbaren) Mittelpunkt des kreisabschnittsförmigen Käfigs 10 hin. Diese Nase kann natürlich auch zusätzlich vorgesehen sein.

Mittels dieser Nase kann ebenfalls im Zusammenspiel mit einem anderen, nicht gezeigten Rückführelement des Bremshebels 16 der Käfig 10 mit den darin gehaltenen Wälzkörpern 11 nach einem Lösen der Bremse, z.B. auch in ziehender Weise, in eine Ausgangsposition zurückgestellt werden.

### BEZUGSZEICHENLISTE

- 1: Brücke
- 2: Bremsstempel
- 3: Druckstück
- 4: Bremshebel
- 5: Hebelarm
- 6: Exzenterabschnitt
- 7: Wälzlagersegment
- 8: Rückführelement
- 9: Kuhle
- 10: Käfig
- 11: Wälzkörper
- 12: Lagerschale
- 13: Mitnehmer
- 14: Nase
- 15: Wälzrolle
- 16: Bremshebel
- 17: Verschlussdeckel
- X: Achsrichtung

## Patentansprüche

1. Scheibenbremse für ein Nutzfahrzeug, mit einem eine fahrzeugseitige Bremsscheibe übergreifenden Bremssattel, in dem eine Zuspannvorrichtung mit einem mittels Schwenklagern schwenkbar gelagerten Bremshebel (4, 16) angeordnet ist, wobei ein Schwenklager als ein in einem kreisabschnittförmigen Käfig (10) gehaltene Wälzkörper (11) aufweisendes, in Schwenkrichtung des Bremshebels (4, 16) der zuzuordnenden Zuspannvorrichtung gekrümmtes Wälzlagersegment (7) ausgebildet ist, wobei der Käfig (10) in Schwenkrichtung des Bremshebels (4, 16) der zuzuordnenden Zuspannvorrichtung beweglich in einer Lagerschale (12) gehalten ist, und der Käfig (10) zur Korrespondenz mit einem Rückführelement (8) des Bremshebels (4, 16) der zuzuordnenden Zuspannvorrichtung an mindestens einer gekrümmten Kante mit einem Mitnehmer (13) eine Nase (14) aufweist, **dadurch gekennzeichnet, dass** der Käfig (10) in einer ersten Position und um 180° gedreht in einer zweiten Position in die Lagerschale (12) einsetzbar ist.

2. Radiale Scheibenbremse, mit einem eine fahrzeugseitige Bremsscheibe übergreifenden Bremssattel, in dem eine Zuspannvorrichtung mit einem mittels verschwenkbaren, als Exzenterhebel ausgebildeten und in Achsrichtung (X) der Bremsscheibe gestreckten Bremshebel (16) angeordnet ist, der sich mit einem Exzenterabschnitt (6) mittels Schwenklagern einerseits am Bremssattel und andererseits an einer Brücke (1) abstützt, in der mindestens ein Bremsstempel (2) angeordnet ist, der bei einer Bremsung gegen einen Bremsbelag in Richtung der Bremsscheibe drückbar ist,
- wobei der Bremshebel (16) mindestens ein ortsfestes Rückführelement (8) aufweist, und wobei ein Schwenklager als ein in einem kreisabschnittförmigen Käfig (10) gehaltene Wälzkörper (11) aufweisendes, in Schwenkrichtung des Bremshebels (16) zuzuordnenden Zuspannvorrichtung beweglich in einer Lagerschale (12) gehalten ist, und der Käfig (10) zur Korrespondenz mit einem Rückführelement (8) des Bremshebels (16) der zuzuordnenden Zuspannvorrichtung an mindestens einer gekrümmten Kante mit einem Mitnehmer (13) eine Nase (14) aufweist,
**dadurch gekennzeichnet, dass**
der Käfig (10) in einer ersten Position und um 180° gedreht in einer zweiten Position in die Lagerschale (12) einsetzbar ist und der kreisabschnittförmige Käfig (10) in der Lagerschale (12) in der ersten Position gehalten ist, in welcher die Nase (14) des Käfigs (10) der Lagerung an der einem Hebelarm (5) des Bremshebels (16) zugewandten Kante des Käfigs (10) angeordnet ist.

3. Axiale Scheibenbremse, mit einer Zuspannvorrichtung und einem eine fahrzeugseitige Bremsscheibe übergreifenden Bremssattel, in welchem die Zuspannvorrichtung angeordnet ist, mit
- einem als Exzenterhebel ausgebildeten schwenkbaren und quer zu einer Achsrichtung (X) der Bremsscheibe gestreckten Bremshebel (4), der sich mit einem Exzenterabschnitt (6) mittels Schwenklagern einerseits am Bremssattel und andererseits an einer Brücke (1) abstützt, in der mindestens ein Bremsstempel (2) angeordnet ist, der bei einer Bremsung gegen einen Bremsbelag in Richtung der Bremsscheibe drückbar ist,
- wobei der Bremshebel (16) mindestens ein ortsfestes Rückführelement (8) aufweist, und
- wobei ein Schwenklager als ein in einem kreisabschnittförmigen Käfig (10) gehaltene Wälzkörper (11) aufweisendes, in Schwenkrichtung des Bremshebels (4) der zuzuordnenden Zuspannvorrichtung gekrümmtes Wälzlagersegment (7) ausgebildet ist, wobei der Käfig (10) in Schwenkrichtung des Bremshebels (4) der zuzuordnenden Zuspannvorrichtung beweglich in einer Lagerschale (12) gehalten ist, und der Käfig (10) zur Korrespondenz mit einem Rückführelement (8) des Bremshebels (4) der zuzuordnenden Zuspannvorrichtung an mindestens einer gekrümmten Kante mit einem Mitnehmer (13) eine Nase (14) aufweist,
**dadurch gekennzeichnet, dass**
der Käfig (10) in einer ersten Position und um 180° gedreht in einer zweiten Position in die Lagerschale (12) einsetzbar ist und der kreisabschnittförmige Käfig (10) in der Lagerschale (12) in der zweiten Position um 180° gedreht zu der ersten Position gehalten ist, wobei in der zweiten Position die Nase (14) des Käfigs (10) der Lagerung an der einem Hebelarm (5) des Bremshebels (4) abgewandten Kante des Käfigs (10) angeordnet ist.

4. Scheibenbremse nach Anspruch 2 oder 3,
**dadurch gekennzeichnet, dass**
die Nase (14) des Käfigs (10) der Lagerung im Mittenbereich der Kante des Käfigs (10) angeordnet ist.

5. Scheibenbremse nach einem der Ansprüche 2 bis 4,
**dadurch gekennzeichnet, dass**
an jeder der sich gegenüberliegenden gekrümmten Kanten des Käfigs (10) der Lagerung ein Mitnehmer (13) angeformt ist.

6. Scheibenbremse nach einem der Ansprüche 2 bis 5,
**dadurch gekennzeichnet, dass**
der Käfig (10) der Lagerung in Krümmungsrichtung schwenkbar in der Lagerschale (12) der Lagerung gehalten ist.

7. Scheibenbremse nach einem der Ansprüche 2 bis 6,
**dadurch gekennzeichnet, dass**
die Mitnehmer (13) des Käfigs (10) der Lagerung außerhalb des Eingriffsbereichs des Bremshebels (4, 16) angeordnet sind.

8. Scheibenbremse nach einem der Ansprüche 2 bis 7,
**dadurch gekennzeichnet, dass**
das Wälzlagersegment (7) der Lagerung zwischen der Brücke (1) und dem Exzenterabschnitt (6) angeordnet ist.

9. Scheibenbremse nach einem der Ansprüche 2 bis 8,
**dadurch gekennzeichnet, dass**
der Mitnehmer (13) in der der Nase (14) abgewandten Hälfte des Käfigs (10) der Lagerung vorgesehen ist.

10. Scheibenbremse der Ansprüche 2 bis 9, **dadurch gekennzeichnet, dass**
der Käfig (10) der Lagerung zur Korrespondenz mit einem Rückführelement des Bremshebels (4, 16) an einer den Käfig (10) quer zur Krümmung begrenzenden Kante, welche der Kante mit der angeformten Nase (14) gegenüber liegt, eine hakenförmige Nase aufweist, deren Spitze zu einem Mittelpunkt des Käfigs (10) weist.

## Claims

1. Disc brake for a commercial vehicle, having a brake calliper encompassing a vehicle-side brake disc, in which brake calliper there is located an application device with a brake lever (4, 16) pivotably mounted by means of pivot bearings, wherein a pivot bearing is designed as an anti-friction bearing segment (7) having rolling bodies (11) held in a circular segment-shaped cage (10) and curved in the pivoting direction of the brake lever (4, 16) of the application device to be assigned, wherein the cage (10) is held in a bearing shell (12) in a manner capable of movement in the pivoting direction of the brake lever (4, 16) of the application device to be assigned and the cage (10) has a lug (14) at at least one curved edge with a driver (13) to correspond with a return element (8) of the brake lever (4, 16) of the application device to be assigned,
**characterised in that**
the cage (10) can be installed into the bearing shell (12) in a first position and rotated by 180° in a second position.

2. Radial disc brake, having a brake calliper encompassing a vehicle-side brake disc, in which brake calliper there is located an application device with a brake lever (16), which is pivotable, designed as an eccentric lever and stretched in the axial direction (X) of the brake disc, which is pivotable, designed as an eccentric lever and stretched in the axial direction (X) of the brake disc, and which is supported with an eccentric section (6) by means of pivot bearings on the brake calliper on the one hand and on a bridge (1) on the other hand, in which bridge (1) at least one brake plunger (2), which can be pressed against a brake pad in the direction of the brake disc in a braking operation, is located,
- wherein the brake lever (16) has at least one stationary return element (8) and wherein a pivot bearing having rolling bodies (11) held in a circular segment-shaped cage (10) is held in a bearing shell (12) in a manner capable of movement in the pivoting direction of the brake lever (16) and the cage (10) has a lug (14) at at least one curved edge with a driver (13) to correspond with a return element (8) of the brake lever (16) of the application device to be assigned,
**characterised in that**
the cage (10) can be installed into the bearing shell (12) in a first position and rotated by 180° in a second position and the circular segment-shaped cage (10) is held in the bearing shell (12) in the first position, in which the lug (14) of the cage (10) of the mounting is located at that edge of the cage (10) which faces a lever arm (5) of the brake lever (16).

3. Axial disc brake, having an application device and a brake calliper encompassing a vehicle-side brake disc, in which brake calliper the application device is located, with
- a brake lever (4) designed as an eccentric lever which is pivotable, designed as an eccentric lever and stretched in the axial direction (X) of the brake disc, and which is supported with an eccentric section (6) by means of pivot bearings on the brake calliper on the one hand and on a bridge (1) on the other hand, in which bridge (1) at least one brake plunger (2), which can be pressed against a brake pad in the direction of the brake disc in a braking operation, is located,
- wherein the brake lever (16) has at least one stationary return element (8), and
- wherein a pivot bearing is designed as an anti-friction bearing segment (7) having rolling bodies (11) held in a circular segment-shaped cage (10) and curved in the pivoting direction of the brake lever (4), wherein the cage (10) is held in a bearing shell (12) in a manner capable of movement in the pivoting direction of the brake lever (4) of the application device to be assigned and the cage (10) has a lug (14) at at least one curved edge with a driver (13) to correspond with a return element (8) of the brake lever (4) of the application device to be assigned,
**characterised in that**
the cage (10) can be installed into the bearing shell (12) in a first position and rotated by 180° in a second position and the circular segment-shaped cage (10) is held in the bearing shell (12) in the second position, rotated by 180° relative to the first position, wherein in the second position the lug (14) of the cage (10) of the mounting is located at that edge of the cage (10) which is averted from a lever arm (5) of the brake lever (4).

4. Disc brake according to claim 2 or 3,
**characterised in that**
the lug (14) of the cage (10) of the mounting is located in the central region of the edge of the cage (10).

5. Disc brake according to any of claims 2 to 4,
**characterised in that**
a driver (13) is formed at each of the opposite curved edges of the cage (10) of the mounting.

6. Disc brake according to any of claims 2 to 5,
**characterised in that**
the cage (10) of the mounting is held in the bearing shell (12) of the mounting in a manner capable of pivoting in the curvature direction.

7. Disc brake according to any of claims 2 to 6,
**characterised in that**
the drivers (13) of the cage (10) of the mounting are located outside the engagement region of the brake lever (4, 16).

8. Disc brake according to any of claims 2 to 7,
**characterised in that**
the anti-friction bearing segment (7) of the mounting is located between the bridge (1) and the eccentric section (6).

9. Disc brake according to any of claims 2 to 8,
**characterised in that**
the driver (13) is provided **in that** half of the cage (10) of the mounting which is averted from the node (14).

10. Disc brake according to any of claims 2 to 9,
**characterised in that**
the cage (10) of the mounting has a hook-shaped nose with a tip pointing to a centre of the cage (10) at an edge bounding the cage (10) transversely to the curvature and located opposite the edge with the formed-on lug (14) to correspond with a return element (8) of the brake lever (4, 16).

## Revendications

1. Frein à disque d'un véhicule utilitaire, comprenant un étrier de frein, qui chevauche un disque de frein du côté du véhicule et dans lequel est monté un système de serrage ayant un levier (4, 16) de frein monté pivotant au moyen de paliers pivotants, dans lequel un palier pivotant est constitué sous la forme d'un segment (7) de palier à roulements incurvé dans la direction de pivotement du levier (4, 16) de frein du système de serrage associé et ayant des corps (11) de roulement maintenus dans une cage (10) en forme de segment de cercle, la cage (10) étant maintenue dans un coussinet (12) de palier, en étant mobile dans une direction de pivotement du levier (4, 16) de frein du système de serrage associé, et la cage (10) ayant, en correspondance avec un élément (8) de retour du levier (4, 16) de frein du système de serrage associé, sur au moins un bord incurvé avec un entraîneur (13)-un bec (14), **caractérisé en ce que** la cage (10) peut être insérée dans le coussinet (12) de palier dans une première position et tournée de 180° dans une deuxième position.

2. Frein à disque radial, comprenant un étrier de frein, qui chevauche un disque de frein du côté du véhicule et dans lequel est disposé un système de serrage ayant un levier (16) de frein constitué pivotant sous la forme d'un levier à excentrique et s'étendant dans la direction (X) axiale du disque de frein, levier qui, par une partie (6) d'excentrique, s'appuie, au moyen de paliers pivotants, d'une part sur l'étrier de frein et d'autre part sur un pontet (1), dans lequel est disposé au moins un piston (2) de frein, qui, lors d'un freinage, peut être poussé en direction du disque de frein sur une garniture de frein,
- dans lequel le levier (16) de frein a au moins un élément (8) de rappel à poste fixe, et dans lequel un palier pivotant est maintenu mobile dans un coussinet (12) de palier sous la forme d'un système de serrage ayant des corps (11) de roulement maintenus dans une cage (10) en forme de segment de cercle et associé dans la direction de pivotement du levier (16) de frein, et la cage (10) a, en correspondance avec un élément (8) de retour du levier (4, 16) de frein du système de serrage associé, sur au moins un bord incurvé avec un entraîneur (13) un bec (14),
**caractérisé en ce que**
la cage (10) peut être insérée dans le coussinet (12) du palier dans une première position et tournée de 180° dans une deuxième position et la cage (10) en forme de segment de cercle est maintenue dans le coussinet (12) du palier dans la première position, dans laquelle le bec (14) de la cage (10) de l'emplacement des paliers est disposé sur le bord de la cage (10) tourné vers un bras (5) du levier (16) de frein.

3. Frein à disque axial, comprenant un système de serrage et un étrier de frein, qui chevauche le disque de frein du côté du véhicule et dans lequel le système de serrage est monté, comprenant
- un levier (4) de frein, qui, constitué sous la forme d'un levier à excentrique, peut pivoter, s'étend transversalement à une direction (X) d'axe du disque de frein et s'appuie par une partie (6) d'excentrique au moyen de paliers pivotants d'une part sur l'étrier de frein et d'autre part sur un pontet (1), dans lequel est disposé au moins un piston (2) de frein, qui, lors d'un freinage, peut être poussé en direction du disque de frein sur une garniture de frein,
- dans lequel le levier (16) de frein a au moins un élément (8) de rappel à poste fixe, et
- dans lequel un palier pivotant est constitué sous la forme d'un segment (7) de palier à roulements ayant des corps (11) de roulement maintenus dans une cage (10) en forme de segment de cercle et incurvés dans la direction de pivotement du levier (4) de frein du système de serrage associé, la cage (10) étant maintenue dans un coussinet (12) de palier mobile dans la direction de pivotement du levier (4) de frein du système de serrage associé et la cage (10) ayant, en correspondance avec un élément (8) de retour du levier (4) de frein du système de serrage associé, sur au moins un bord incurvé avec un entraîneur (13) un bec (14),
**caractérisé en ce que**
la cage (10) peut être insérée dans le coussinet (12) du palier dans une première position et tournée de 180° dans une deuxième position et la cage (10) en forme de segment de cercle est maintenue dans le coussinet (12) de palier dans la deuxième position tournée de 180° par rapport à a première position, dans lequel, dans la deuxième position, le bec (14) de la cage (10) de l'emplacement des paliers est disposé sur le bord de la cage (10) éloigné d'un bras (5) du levier (4) de frein.

4. Frein à disque suivant la revendication 2 ou 3, **caractérisé en ce que**
le bec (14) de la cage (10) de l'emplacement des paliers est disposé dans la partie médiane du bord de la cage (10).

5. Frein à disque suivant l'une des revendications 2 à 4, **caractérisé en ce que**,
sur chacun des bords incurvés, se faisant face de la cage (10) de l'emplacement des paliers, vient de matière un entraîneur (13).

6. Frein à disque suivant l'une des revendications 2 à 5, **caractérisé en ce que**
la cage (10) de l'emplacement des paliers est maintenue pivotante dans la direction de courbure dans le coussinet (12) de palier de l'emplacement des paliers.

7. Frein à disque suivant l'une des revendications 2 à 6, **caractérisé en ce que**
les entraîneurs (13) de la cage (10) de l'emplacement des paliers sont disposés à l'extérieur de la partie d'intervention du levier (4, 16) de frein.

8. Frein à disque suivant l'une des revendications 2 à 7, **caractérisé en ce que**
le segment (7) de palier à roulements de l'emplacement des paliers est disposé entre le pontet (1) et la partie (6) à excentrique.

9. Frein à disque suivant l'une des revendications 2 à 8, **caractérisé en ce que**
l'entraîneur (13) est prévu dans la moitié, loin du bec (14), de la cage (10) de l'emplacement des paliers.

10. Frein à disque suivant l'une des revendications 2 à 9, **caractérisé en ce que**
la cage (10) de l'emplacement des paliers a, en correspondance avec un élément de rappel du levier (4, 16) de frein, sur un bord délimitant la cage (10) transversalement à la courbure et faisant face au bord, sur lequel le bec (14) vient de matière, un bec en forme de crochet, dont la pointe est tournée vers un centre de la cage (10).
